# EUROPÄISCHE PATENTANMELDUNG

(11) **EP 2 289 626 A2**
(43) Veröffentlichungstag der Anmeldung: **02.03.2011**
(21) Anmeldenummer: 10401101.0
(22) Anmeldetag: 15.07.2010
(51) Int. Cl.: B02C 18/22, B02C 19/00

(54) **Vorrichtung zum Zerkleinern von Glasbehältern**

(30) Priorität: 27.08.2009 DE 102009043876
(71) Anmelder: Wincor Nixdorf International GmbH, 33106 Paderborn (DE)
(72) Erfinder: Springsguth, Stephan, 98704 Langewiesen (DE); Machold, Robert, 98693 Manebach (DE)

(57) **Zusammenfassung**

Es wird eine Vorrichtung zum Zerkleinern von Behältern aus Glas vorgeschlagen mit mindestens einer Transporteinrichtung (1) zum Transportieren der Behälter (4), mit einer zur Rotation angetriebenen Welle (5) an der Transporteinrichtung (1), mit mindestens drei an der Welle (5) angeordneten Flügeln (9), welche relativ zur Welle (5) nach außen abstehen und welche sich zumindest abschnittsweise parallel zur Welle (5) erstrecken, wobei sich die Welle (5) und die Flügel (9) ausschließlich auf der der Aufnahme von Behältern (4) dienenden Seite der Transporteinrichtung (1) befinden, und mit einem oder mehreren spitz zulaufenden Abschnitten (10) an der der Welle abgewandten Seite der Flügel.

## Beschreibung

Die Erfindung geht aus von einer Vorrichtung zum Zerkleinern von Behältern aus Glas.

Derartige Vorrichtungen werden insbesondere bei der Leergutrücknahme eingesetzt. Sie dienen dazu, die durch die Verbraucher zurückgegebenen Glasbehälter, die nicht erneut verwendet werden, zu zerkleinern und zu zerstören. Dies gilt insbesondere für Einwegverpackungen aus Glas, auf die seit dem 1. Januar 2003 in Deutschland ein Einwegpfand anfällt. Bei Rückgabe der Behälter wird das erhobene Pfand an den Verbraucher zurückerstattet. Die Behälter sind mit speziellen Kennzeichnungen versehen, denen der Kunde die Eigenschaft eines Einwegpfands entnehmen kann. Hierzu zählt beispielsweise das Logo der Deutsche Pfandsystem GmbH. Die Zerkleinerung und Zerstörung der Behälter dient zum einen dazu, eine zweite Rückgabe eines Behälter und eine zweite Auszahlung eines Pfandes zu vermeiden und zum anderen das Volumen der zurückgegebenen Behälter zu reduzieren. Die zerkleinerten Behälter beanspruchen weniger Platz als die unbeschädigten Behälter. Dadurch werden die Lagerung und der Transport erleichtert.

Vorrichtungen zum Zerkleinern von Behältern aus Glas können Bestandteil eines Leergutrücknahmeautomaten sein. Sie können jedoch auch als eigenständige Vorrichtungen betrieben werden. Derartige eigenständige Vorrichtungen können zum Beispiel eingesetzt werden, um Mehrwegbehälter aus Glas zu zerkleinern, die aufgrund einer Beschädigung oder Abnutzung nicht weiter verwendet werden können.

Es sind Vorrichtungen zum Zusammendrücken von Behältern aus Kunststoff, insbesondere PET, und Blech bekannt, bei denen die Behälter durch zwei ineinander greifende Walzen eingezogen und verpresst werden. Jede der Walzen ist mit mehreren parallel zueinander angeordneten und senkrecht zur Drehachse der Walze ausgerichteten Schneidscheiben ausgestattet. Die Schneidscheiben weisen entlang ihres Umfangs mehrere spitzwinklige Haken auf. Darüber hinaus sind Vorrichtungen zum Zusammendrücken von Behältern aus Kunststoff und Blech bekannt, die eine Walze mit mehreren Schneidscheiben und ein Gegenlager in Form einer mit Rillen ausgestatteten Platte aufweisen. Dabei greifen die Schneidscheiben in die Rillen der Platte ein. Um zu verhindern, dass die Vorrichtung durch Gegenstände beschädigt wird, deren Härte größer ist als die der zu zerkleinernden Behälter, ist das Gegenlager beweglich angeordnet. Zu derartigen Gegenständen zählen beispielsweise Steine oder Schrauben, die zusammen mit den Behältern in die Vorrichtung gelangen können.

Derartige Vorrichtungen eignen sich zwar für das Zerkleinern von Behältern aus Kunststoff und Blech, sind jedoch zum Einsatz bei Glasbehälter ungeeignet, da sich Glas nicht wie Kunststoff und Blech elastisch verformt, sondern in kleine und große Scherben zerbricht. Die kleinen Scherben dringen in die Zwischenräume der Walzen und in die Rillen der Platte ein. Sie verstopfen die Zwischenräume und können nur mit großem Aufwand entfernt werden. Darüber hinaus haben die bekannten Vorrichtungen den Nachteil, dass ein großes Drehmoment für den Antrieb der Walzen benötigt wird, um das Zusammenpressen von Behältern aus Kunststoff und Blech zu gewährleisten. Die Vorrichtungen benötigen daher starke Antriebe. Die Walzen und gegebenenfalls ein plattenförmiges Gegenlager müssen eine hohe Stabilität aufweisen, um die bei der Verformung der Behälter auftretenden Kräfte zu kompensieren. Bekannte Vorrichtungen weisen daher ein großes Baumaß auf und sind in ihrer Herstellung aufwändig und teuer.

Der Erfindung liegt die Aufgabe zugrunde, eine Vorrichtung zum Zerkleinern von Behältern aus Glas zur Verfügung zu stellen, die durch die anfallenden Scherben nicht beeinträchtigt wird, keinen starken Antrieb benötigt, die wartungsarm und nicht verschleißanfällig ist, sich durch ein kleines Baumaß auszeichnet und die einfach und kostengünstig herzustellen ist.

Diese Aufgabe wird durch eine Vorrichtung mit den Merkmalen des Anspruchs 1 gelöst. Anstelle einer oder mehrerer Walzen ist die erfindungsgemäße Vorrichtung mit einer zur Rotation angetriebenen Welle und mehreren an der Welle angeordneten Flügeln ausgestattet, welche an ihren der Welle abgewandten Enden mit einem oder mehreren spitz zulaufenden Abschnitten ausgestattet sind. Die Abschnitte laufen in Richtung der von der Welle abgewandten Seite der Flügel spitz zu. Die Welle wird durch einen Rotationsantrieb bevorzugt mit konstanter Geschwindigkeit angetrieben. Der Rotationsantrieb kann Teil der Vorrichtung sein. Ist die Vorrichtung in einen Leergutrücknahmeautomat integriert, so kann der Rotationsantrieb Teil des Leergutrücknahmeautomaten sein und mehrere Komponenten des Leergutrücknahmeautomaten antreiben.

Die Behälter werden über eine Transporteinrichtung der Welle mit den Flügeln zugeführt. Die Welle mit den Flügeln befindet sich an der Transporteinrichtung. Welle und Flügel sind auf der den Behältern zugewandten Seite der Transporteinrichtung angeordnet. Dabei durchdringen die Flügel die Transporteinrichtung nicht. Sie weisen stets einen Abstand zu der Transporteinrichtung auf. Da die Transporteinrichtung den durch die Flügel auf einen Behälter ausgeübten Kräften standhalten muss, weist sie eine gewisse Stabilität auf. Als Transporteinrichtungen eignen sich beispielsweise schiefe Ebenen mit oder ohne seitliche Begrenzungen oder Führungselemente. Durch die seitlichen Begrenzungen werden die Behälter beim Transport ausgerichtet und auf oder an der Transporteinrichtung gehalten. Besonders bevorzugt ist ein Transport der Behälter in liegender Ausrichtung und in deren Längsrichtung. Die Position der Welle relativ zu der Transporteinrichtung und die Länge der an der Welle befestigten Flügel ist derart aufeinander abgestimmt, dass zwischen der Transporteinrichtung und den Flügeln stets ein Abstand besteht. Dieser Abstand ist so klein, dass es zu einer Wechselwirkung zwischen den Flügeln und einem auf der Transporteinrichtung zugeführten Behälter kommt. Der Abstand ist daher kleiner als der vorgegebene minimale Durchmesser eines von der Vorrichtung angenommenen Behälters. Darüber hinaus ist der Abstand so groß, dass nicht aus Glas bestehende, harte Gegenstände, wie Steine oder Metallteile nicht von den Flügeln erfasst werden, sofern sie eine vorgegebene Größe nicht überschreiten. Dies gilt insbesondere für kleine Teile, die über die Behälteröffnung in die Behälter gelangen können. Dabei greifen die Flügel nicht in die Transporteinrichtung ein. Die nach oben weisende Oberfläche der Transporteinrichtung ist bevorzugt geschlossen, so dass keine Glasbruchstücke in die Transporteinrichtung eindringen können. Eine Beschädigung der Vorrichtung sowohl durch harte Gegenstände als auch durch Glasbruchstücke und Scherben kann somit weitgehend ausgeschlossen werden. Die Vorrichtung ist daher wartungsarm und nicht anfällig gegen Beschädigung und Verschleiß.

Die Flügel können als ebene Platte ausgebildet sein. Sie können darüber hinaus auch eine Krümmung aufweisen oder aus zwei ebenen Platten in F-Form bestehen. Dabei weisen die Flügel zumindest an ihrem der Welle abgewandten Ende eine Ausdehnung parallel zur Längsachse der Welle auf.

Die Flügel sind an ihren der Welle abgewandten Enden mit einem oder mehreren spitz zulaufenden Abschnitten ausgestattet. Dabei kann es sich beispielsweise um einen Konus mit punktförmiger Spitze oder um einen Keil mit geradlinig verlaufender Spitze in zwei Dimensionen handeln. Als Konus gelten in diesem Sinne nicht nur Kegel, sondern auch Pyramiden. Die Abschnittsspitzen sind vorzugsweise auf einem zur Welle hin gebogenen Teilkreisabschnitt des Flügels angeordnet. Mit den spitz zulaufenden Abschnitten werden die Flügel von oben an die auf der Transporteinrichtung transportierten Behälter gedrückt. Die Kraft, die dabei punktuell oder in einem kleinen Abschnitt mit den Spitzen auf die Behälter ausgeübt wird, resultiert aus dem Drehmoment des Rotationsantriebs der Welle. Dabei gehen die Behälter zu Bruch. Da die Kraft nur in den den Spitzen der Flügel entsprechenden kleinen Bereichen auf die Behälter einwirkt, sind keine großen Drehmomente notwendig, um den Glasbruch der Behälter auszulösen. Es bedarf daher keiner großen Drehmomente und keines leistungsstarken Rotationsantriebs für die Vorrichtung. Dies führt wiederum dazu, dass diejenigen Teile der Vorrichtung, die die Kräfte auf die Behälter übertragen und die Kräfte aufnehmen müssen, insbesondere die Welle, die Flügel und Transporteinrichtung, keine so Stabilität haben müssen wie die entsprechenden Teile bekannter Vorrichtungen zum Zerkleinern von Kunststoff- und Blechbehältern. Die Vorrichtung kann daher ein kleines Baumaß aufweisen. Sie ist einfach und kostengünstig herzustellen.

Um den Bruch eines Behälters zu gewährleisten, findet gleichzeitig eine Wechselwirkung eines Behälters mit zwei an der Welle angeordneten Flügeln statt. Durch den Abstand zwischen der Spitze der spitz zulaufenden Abschnitte der Flügel und der Welle sowie durch den Winkel zwischen je zwei Flügeln wird daher die minimale Länge der Behälter vorgegeben, die durch die Vorrichtung zerstört werden. In bevorzugter Weise sind die Flügel gleichmäßig um die Welle verteilt angeordnet. In diesem Fall ist der Winkel zwischen je zwei Flügeln für alle Flügel gleich.

Die Funktionsweise der Vorrichtung ist wie folgt: Ein Behälter bewegt sich auf der Transporteinrichtung in einer Transportrichtung auf den Bereich zu, in dem die Welle mit den Flügeln angeordnet ist. Dabei werden die Welle und die an der Welle angeordneten Flügel um die Längsachse der Welle rotiert. Sobald der Behälter mit seinem in Transportrichtung nach vorne weisenden Bereich auf einen ersten Flügel trifft, wird der Behälter abgebremst. Er kann jetzt nur noch mit einer Geschwindigkeit vorwärts bewegt werden, die an die Rotationsgeschwindigkeit der Welle und der Flügel angepasst ist. Während der Behälter durch den ersten Flügel gehalten ist, senkt sich von oben ein zweiter Flügel auf einen Bereich des Behälters ab, der in Transportrichtung hinter seinem vorderen Bereich liegt. Der Behälter kann den beiden Flügeln nicht ausweichen. Der an dem der Welle abgewandten Ende des zweiten Flügels angeordnete spitz zulaufende Abschnitt wird mit einer aus dem Drehmoment des Rotationsantriebs der Welle resultierenden Kraft an den Behälter gedrückt. Dabei geht der Behälter zu Bruch. Die Bruchstücke oder Scherben werden durch die Transporteinrichtung weiter transportiert und beispielsweise einem Sammelbehälter zugeführt.

Der durch die Wechselwirkung mit den Flügeln ausgelöste Glasbruch sorgt zum einen für eine Zerkleinerung der Behälter in Scherben und Glasbruchstücke und vermeidet zum anderen, dass für einen Behälter ein zweites Mal ein Pfand eingefordert werden kann.

Nach einer vorteilhaften Ausgestaltung weist die Transporteinrichtung eine schiefe Ebene auf. Die Behälter überwinden auf der schiefen Ebene einen Höhenunterschied. Da die Behälter durch ihre eigene Gewichtskraft angetrieben werden, ist kein gesonderter Antrieb für den Transport der Behälter notwendig. Dies trägt zu einem einfachen technischen Aufbau der Vorrichtung und zu einem kleinen Baumaß bei.

Nach einer weiteren vorteilhaften Ausgestaltung der Erfindung ist die schiefe Ebene an zwei einander gegenüberliegenden Seiten mit Führungselementen ausgestattet. Diese halten die Behälter auf der schiefen Ebene und sorgen dafür, dass die Behälter in Transportrichtung ausgerichtet werden.

Nach einer weiteren vorteilhaften Ausgestaltung der Erfindung weist die Transporteinrichtung eine nach oben offene Rinne auf. Dabei kann es sich beispielsweise um eine nach oben offene Halbröhre handeln. Die schiefe Ebene kann Teil dieser Rinne sein. Ebenso können Führungselemente an der schiefen Ebene Teil der Rinne sein. Die Rinne wirkt wie eine Rutsche. Dabei kann die Steigung über die gesamte Länge der Transporteinrichtung gleich oder unterschiedlich sein. Die Rinne kann senkrecht zur Transportrichtung der Behälter eine Krümmung aufweisen. Sie kann darüber hinaus auch eine Krümmung in Transportrichtung aufweisen.

Nach einer weiteren vorteilhaften Ausgestaltung der Erfindung ist die Öffnungsweite der Rinne größer als die Ausdehnung der Flügel parallel zur Welle. Dadurch wird verhindert, dass die Flügel die Rinne berühren.

Nach einer weiteren vorteilhaften Ausgestaltung der Erfindung ist der seitliche Abstand zwischen den Flügeln und den Führungselementen kleiner als ein vorgegebener minimaler Durchmesser eines Behälters. Dadurch wird vermieden, dass sich ein Behälter zwischen den Flügeln und den Führungselementen hindurch bewegt und eine Zerstörung damit umgeht.

Nach einer weiteren vorteilhaften Ausgestaltung der Erfindung ist jeder Flügel als ebene Platte ausgebildet.

Nach einer weiteren vorteilhaften Ausgestaltung der Erfindung weist jeder Flügel zwei plattenförmige Abschnitte auf, die L-förmig zueinander verlaufen. Die beiden Abschnitte stoßen entlang einer Kante aufeinander, die parallel zur Längsachse der Welle verläuft. An dem der Welle abgewandten plattenförmigen Element sind die spitz zulaufenden Abschnitte angeordnet. Dadurch wird erreicht, dass die spitz zulaufenden Abschnitte senkrecht oder näherungsweise senkrecht von oben auf einen Behälter abgesenkt werden und gegen die Oberfläche des Behälters gedrückt werden. Dies sorgt für eine optimale Kraftübertragung.

Nach einer weiteren vorteilhaften Ausgestaltung der Erfindung ist ein länglicher Hohlkörper verdrehsicher an der Welle und koaxial zur Welle angeordnet. Die Flügel sind an dem länglichen Hohlkörper befestigt. Der Hohlraum des Hohlkörpers ist dabei an die Welle angepasst. Als Verdrehsicherung dienen beispielsweise an der Welle vorgesehene Nuten oder Rillen, in die Vorsprünge an der nach innen weisenden Seite des Hohlkörpers eingreifen. Ebenso können die Nuten an dem Hohlkörper und die Vorsprünge an der Welle vorgesehen sein. Der Hohlkörper dient als Befestigungseinrichtung für die Flügel.

Nach einer weiteren vorteilhaften Ausgestaltung der Erfindung weisen die spitz zulaufenden Abschnitte die Form eines Keils oder eines Konus auf.

Nach einer weiteren vorteilhaften Ausgestaltung der Erfindung bilden mehrere spitz zulaufende Abschnitte eines Flügels Zacken oder Zähne. Damit befindet sich zwischen je zwei spitz zulaufenden Abschnitten eine Vertiefung. Das der Welle abgewandte Ende eines Flügels ist damit gezackt.

Nach einer weiteren vorteilhaften Ausgestaltung der Erfindung weist jeder Flügel mehrere spitz zulaufende Abschnitte auf. Dabei befindet sich ein erster spitz zulaufender Abschnitt an einer Seite eines Flügels und ein zweiter spitz zulaufender Abschnitt an der gegenüberliegenden Seite des Flügels. Zwischen dem ersten und dem zweiten Abschnitt befindet mindestens ein dritter spitz zulaufender Abschnitt an dem Flügel. Der Abstand zwischen der Spitze des ersten spitz zulaufenden Abschnitts und der Welle ist gleich dem Abstand zwischen der Spitze des zweiten spitz zulaufenden Abschnitts und der Welle. Dieser Abstand ist größer als der Abstand zwischen der Spitze des dritten spitz zulaufenden Abschnitts und der Welle. Dadurch ist die Form des mit spitz zulaufenden Abschnitten ausgestatteten Endes der Flügel an eine runde Form der Behälter angepasst.

Nach einer weiteren vorteilhaften Ausgestaltung der Erfindung ist für alle Flügel der Winkel α zwischen je zwei Flügeln gleich. Das Produkt α/360° * 2 * π * r ist kleiner als die vorgegebene minimale Länge eines Behälters, wobei r dem Abstand zwischen der Spitze eines keil- oder konusförmigen Abschnitts und der Welle entspricht. Dadurch wird gewährleistet, dass Behälter mit einer vorgegebenen Mindestlänge durch die Vorrichtung zu Bruch gehen.

Nach einer weiteren vorteilhaften Ausgestaltung der Erfindung ist in Transportrichtung nach der Welle mit Flügeln eine Brecherwalze angeordnet. Die Brecherwalze wird zur Rotation angetrieben. Dabei verläuft die Rotationsachse der Brecherwalze parallel zu der Welle mit den Flügeln beziehungsweise parallel zu der Längsachse der Welle. Die Brecherwalze ist mit spitzen Vorsprüngen an ihrer Oberfläche ausgestattet. Sie sorgt dafür, dass die durch die Welle mit Flügeln erzeugten Bruchstücke weiter zerkleinert werden.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung sind zwei Ausführungsbeispiele einer erfindungsgemäßen Vorrichtung dargestellt. Es zeigen:
- Figur 1: Vorrichtung zum Zerkleinern von Behältern aus Glas in perspektivischer Darstellung,
- Figur 2: Vorrichtung gemäß Figur 1 in einer perspektivischen Ansicht von der Seite,
- Figur 3: Vorrichtung gemäß Figur 1 in einer Ansicht, bei der die Blickrichtung der Transportrichtung der Transporteinrichtung ent- spricht,
- Figur 4: Vorrichtung gemäß Figur 1 in Seitenansicht mit einer ersten Position der an einer Welle angeordneten Flügel,
- Figur 5: Vorrichtung gemäß Figur 1 in einer Seitenansicht mit einer zweiten Position der an einer Welle angeordneten Flügel,
- Figur 6: zweites Ausführungsbeispiel einer Vorrichtung zum Zerkleinern von Behältern aus Glas mit einer zusätzlichen Brecherwalze in Seitenansicht.

### Beschreibung der Ausführungsbeispiele

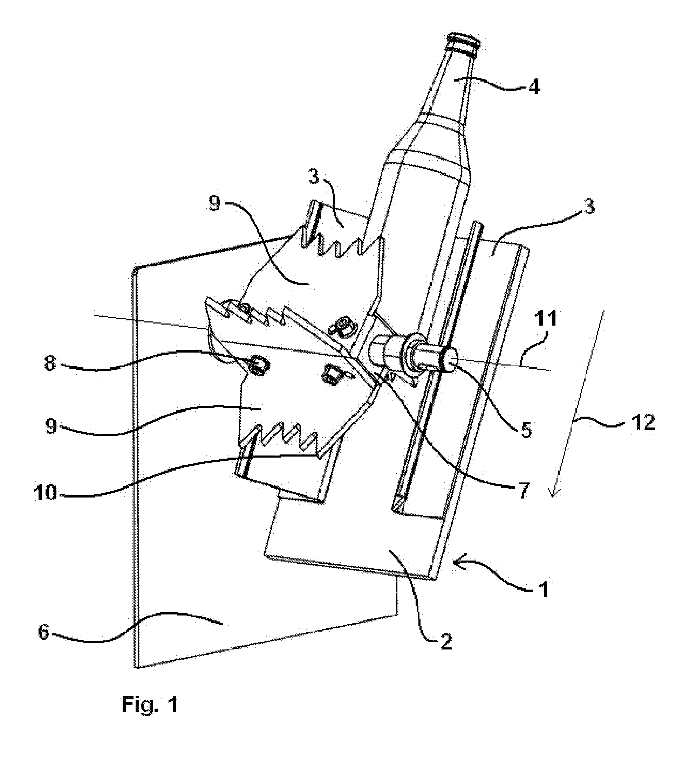

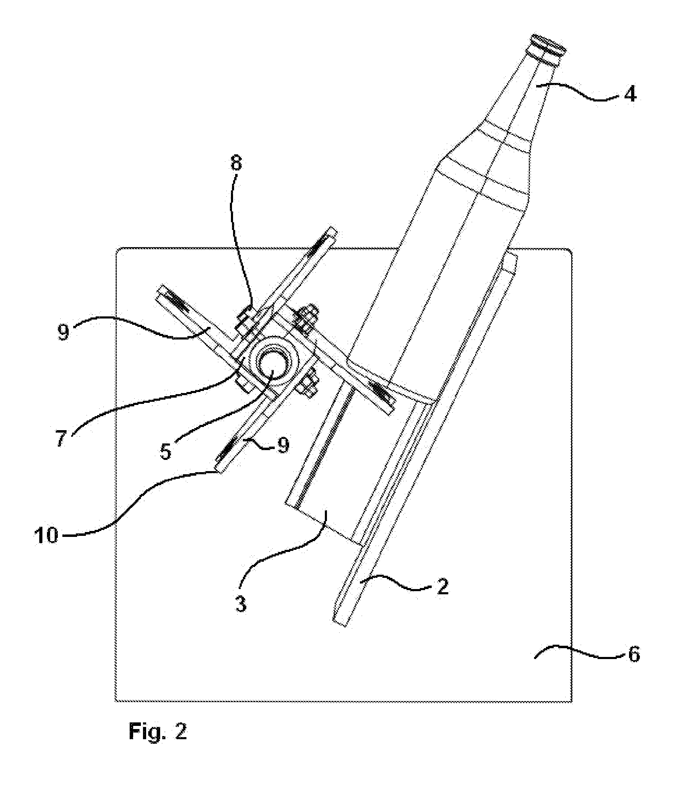

In den Figuren 1 bis 5 ist ein erstes Ausführungsbeispiel einer Vorrichtung zum Zerkleinern von Behältern aus Glas dargestellt. Die Vorrichtung weist als Transporteinrichtung 1 eine schiefe Ebene 2 mit seitlich angeordneten Führungselementen 3 auf. Die schiefe Ebene 2 besteht dabei aus einer Platte, an welcher die Führungselemente seitlich angeordnet sind. Auf der Transporteinrichtung 1 gleitet ein Behälter 4 seiner Gewichtskraft folgend nach unten. Bei dem Behälter 4 handelt es sich um eine Glasflasche. Die Vorrichtung ist mit einer Welle 5 ausgestattet, die durch einen in der Zeichnung nicht dargestellten Rotationsantrieb zur Rotation angetrieben wird. Der Rotationsantrieb befindet sich hinter einer Platte 6, durch welche die Welle 5 hindurchgeführt ist. Die Platte 6 kann Teil eines Gehäuses der Vorrichtung sein. Sie dient der Anordnung der Transporteinrichtung 1 und der Welle 5. Auf die Welle 5 ist in Längsrichtung ein länglicher Hohlkörper 7 mit quadratischem Querschnitt aufgesetzt. Dabei ist der längliche Hohlkörper 7 verdrehsicher an der Welle 5 angeordnet. An dem länglichen Hohlkörper 7 sind mit Schrauben 8 vier Flügel 9 befestigt. Je zwei Flügel 9 schließen dabei einen Winkel von 90 Grad ein. Jeder der Flügel weist die Form einer Platte auf. Das der Welle 5 abgewandte Ende eines jeden Flügels ist mit fünf spitz zulaufenden Abschnitten 10 versehen. Die spitz zulaufenden Abschnitte 10 bilden mehrere Zacken, wobei jeder der Zacken die Form eines Keils aufweist. Dabei ist der Abstand zwischen der Spitze des mittleren der fünf spitz zulaufenden Abschnitte 10 eines Flügels 9 zur Längsachse der Welle 5 kleiner als der entsprechende Abstand der Spitze der beiden äußeren spitz zulaufenden Abschnitte 10 eines Flügels 9 zur Längsachse der Welle 5. Die Längsachse der Welle 5 ist in Figur 1 durch eine Gerade 11 dargestellt. Die Spitzen der spitz zulaufenden Abschnitte 10 eines Flügels 9 liegen damit auf einer gekrümmten Kurve, welche in der Zeichnung nicht dargestellt ist. Die Krümmung dieser Kurve ist an die Form der Behälter 4 angepasst. Sie sorgt dafür, dass die spitz zulaufenden Abschnitte 10 gleichzeitig oder nahezu gleichzeitig auf einen Behälter 4 abgesetzt werden.

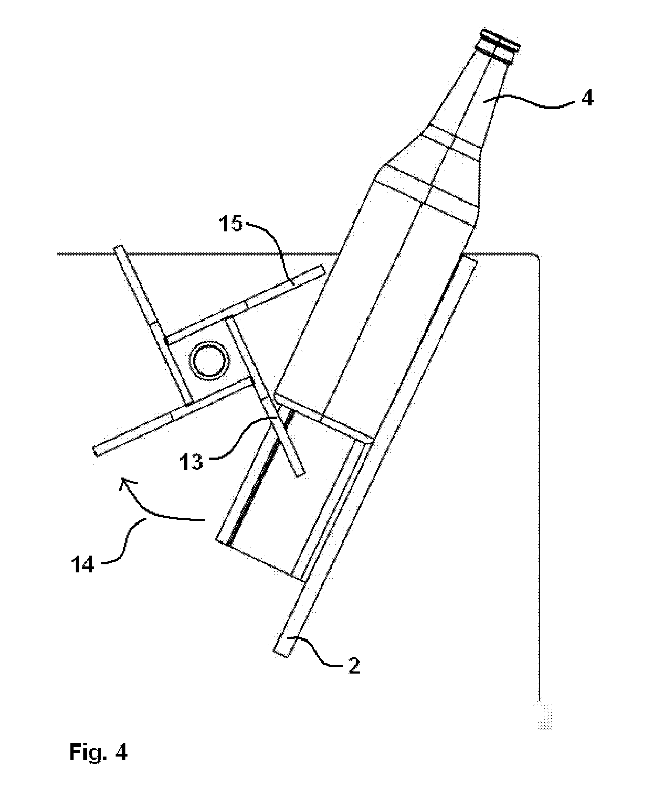

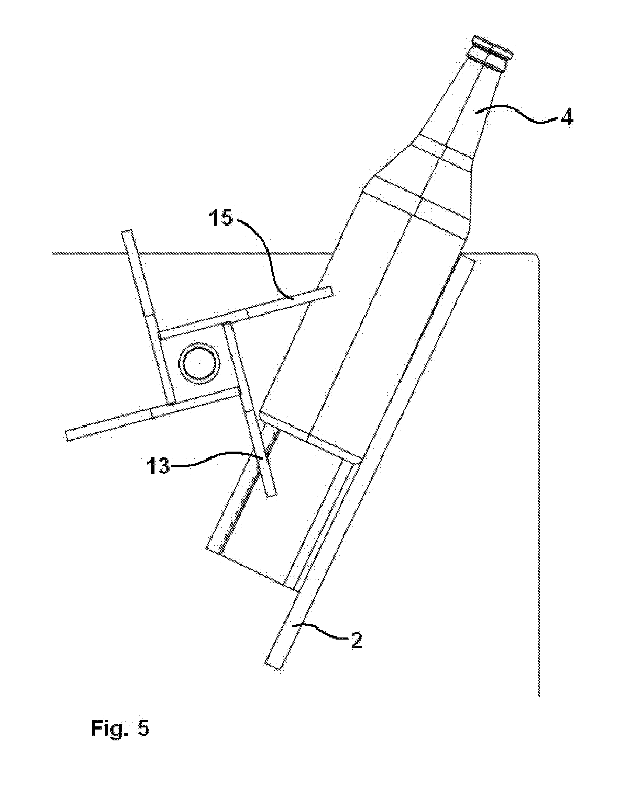

Die Funktionsweise der Vorrichtung gemäß erstem Ausführungsbeispiel wird im Folgenden anhand der Figuren 1 bis 5 erläutert: Der Behälter 4 gleitet an der schiefen Ebene 2 entlang nach unten. Die Transportrichtung ist in Figur 1 durch den Pfeil 12 dargestellt. Dabei wird der Behälter 4 seitlich durch die Führungselemente 3 geführt, so dass er weder seine Transportrichtung noch seine Ausrichtung relativ zur Transportrichtung ändern kann. Dabei liegt der Behälter 4 auf der schiefen Ebene 2 auf. Der Transport erfolgt in Längsrichtung des Behälters 4. Bei seiner Bewegung trifft der Behälter 4 auf einen ersten Flügel 13 der vier Flügel 9. Dies ist in Figur 4 dargestellt. Der erste Flügel 13 hindert den Behälter daran weiter entlang der schiefen Ebene 2 seiner Gewichtskraft folgend nach unten zu gleiten. Da sich der Flügel 13 in der durch einen Pfeil 14 in Figur 4 dargestellten Richtung dreht, kann sich der Behälter 4 zwar weiter auf der schiefen Ebene 2 nach unten bewegen, jedoch gegenüber seinem freien Gleiten mit reduzierter Geschwindigkeit. Dem Flügel 13 folgt in Drehrichtung 14 ein zweiter Flügel 15 nach. Dies ist ebenfalls in Figur 4 dargestellt. Bei einer weiteren Bewegung des Behälters 4 entlang der schiefen Ebene 2 setzt der zweite Flügel 15 mit seinen spitz zulaufenden Abschnitten 10 auf den Behälter auf. Dies ist in Figur 5 dargestellt. Da die beiden seitlichen spitz zulaufenden Abschnitte 10 einen größeren Abstand zur Längsachse 11 der Welle 5 aufweisen, sind sie in der Seitenansicht gemäß Figur 5 erkennbar, obwohl eine Zerstörung des Behälters 4 noch nicht stattgefunden hat. Bei einer weiteren Rotation der Flügel in Drehrichtung 14 werden die spitz zulaufenden Abschnitte 10 des zweiten Flügels 15 mit einer aus dem Drehmoment des Rotationsantriebs resultierenden Kraft gegen den Behälter 4 gedrückt und eine Keilwirkung auf die Oberfläche ausgeübt. Je weiter der zweite Flügel gedreht um so stärker wird dabei die auf die Oberfläche des Behälters wirkende Kraft. Der durch den ersten Flügel 13 und die schiefe Ebene 2 sowie die Führungselemente 3 gehaltene Behälter 4 zerbricht. Das Brechen des Behälters ist in der Zeichnung nicht dargestellt. Der Behälter wechselwirkt mit dem ersten Flügel 13 und dem zweiten Flügel 15 zur gleichen Zeit. Während der zweite Flügel 15 mit seinen spitz zulaufenden Abschnitten 10 von oben gegen die Oberfläche des Behälters drückt, nehmen die schiefe Ebene 2 und der erste Flügel 13 die Kräfte auf. Die spitz zulaufenden Abschnitte 10 des zweiten Flügels 15 werden dabei wie ein Keil in die Oberfläche des Behälters eingetrieben.

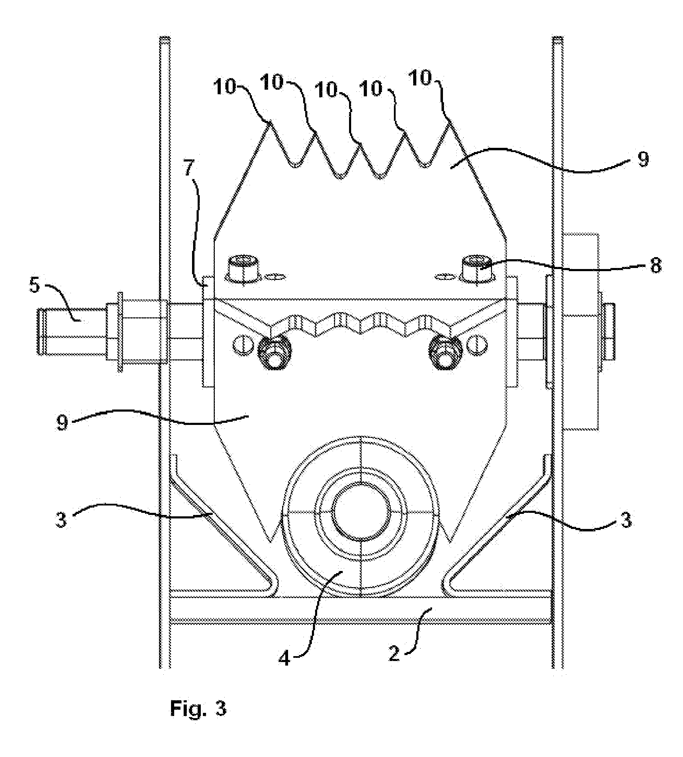

Die Form der Flügel 9 ist an die Form runder Behälter, wie die in der Zeichnung dargestellten Glasflasche, sowie an die Form der seitlichen Führungselemente 3 angepasst. Dies ist in Figur 3 erkennbar. Die den seitlichen Führungselementen 3 zugewandten Seiten in der den Führungselementen am nächsten kommenden Position der Flügel 9 sind abgeschrägt. Selbst in der der schiefen Ebene und den Führungselementen am nächsten kommende Ausrichtung der Flügel 9 ist zu den Seiten und nach unten ein Abstand zwischen den Flügel 9, der schiefen Ebene 2 und den Führungselementen 3 gegeben. Flügel 9 und Transporteinrichtung 1 sind damit berührungsfrei. Die Abstände sind so groß, dass selbst kleine Teile wie Steine oder Metallteile in den Zwischenräumen nicht eingeklemmt werden können.

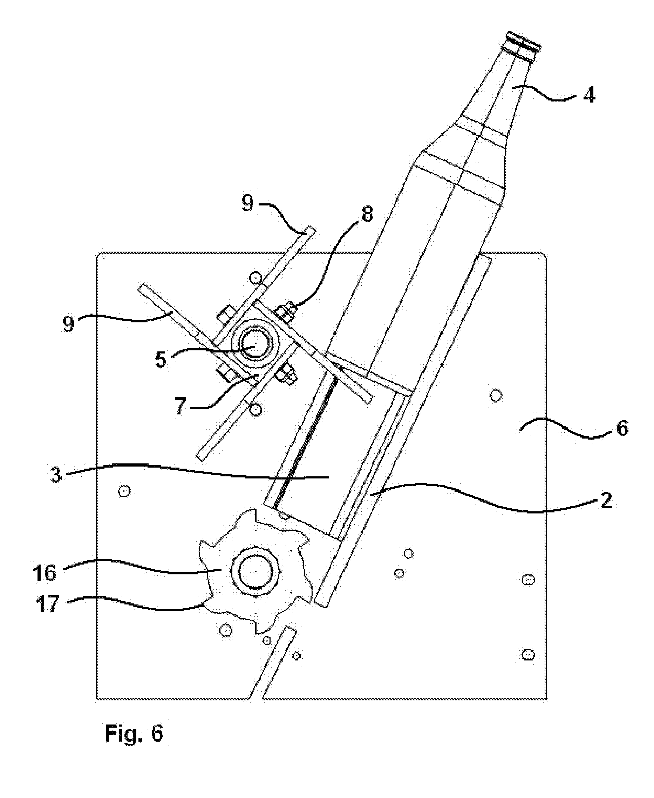

In Figur 6 ist ein zweites Ausführungsbeispiel einer Vorrichtung zum Zerkleinern von Behältern aus Glas dargestellt. Im Unterschied zum ersten Ausführungsbeispiel gemäß Figuren 1 bis 5 weist diese Vorrichtung in Transportrichtung nach der Welle 5 mit Flügeln 9 eine zusätzliche Brecherwalze 16 auf. Diese ist entlang ihrer Oberfläche mit spitz zulaufenden Abschnitten 17 ausgestattet. Die Brecherwalze dient dazu, die Glasbruchstücke, die aus der Wechselwirkung des Behälters 4 mit den Flügeln 9 hervorgehen, weiter zu zerkleinern. Darüber hinaus stimmt die Vorrichtung gemäß Figur 6 mit der Vorrichtung gemäß den Figuren 1 bis 5 überein.

Sämtliche Merkmale der Erfindung können sowohl einzeln als auch in beliebiger Kombination miteinander erfindungswesentlich sein.

### Bezugszeichenliste

- 1: Transporteinrichtung
- 2: schiefe Ebene
- 3: Führungselement
- 4: Behälter
- 5: Welle
- 6: Platte
- 7: länglicher Hohlkörper
- 8: Schraube
- 9: Flügel
- 10: spitz zulaufender Abschnitt
- 11: Längsachse der Welle
- 12: Transportrichtung
- 13: erster Flügel
- 14: Drehrichtung der Flügel
- 15: zweiter Flügel
- 16: Brecherwalze
- 17: spitz zulaufender Abschnitt

## Patentansprüche

1. Vorrichtung zum Zerkleinern von Behältern aus Glas
mit mindestens einer Transporteinrichtung (1) zum Transportieren der Behälter (4),
mit einer zur Rotation angetriebenen Welle (5) an der Transporteinrichtung (1),
mit mindestens drei an der Welle (5) angeordneten Flügeln (9), welche relativ zur Welle (5) nach außen abstehen und welche sich zumindest abschnittsweise parallel zur Welle (5) erstrecken, wobei sich die Welle (5) und die Flügel (9) ausschließlich auf der der Aufnahme von Behältern (4) dienenden Seite der Transporteinrichtung (1) befinden,
mit einem oder mehreren spitz zulaufenden Abschnitten (10) an der der Welle abgewandten Seite der Flügel.

2. Vorrichtung nach Anspruch 1, **dadurch gekennzeichnet, dass** die Transporteinrichtung (1) eine schiefe Ebene (2) aufweist.

3. Vorrichtung nach Anspruch 3, **dadurch gekennzeichnet, dass** die schiefe Ebene (2) an zwei einander gegenüberliegenden Seiten mit Führungselementen (3) ausgestattet ist.

4. Vorrichtung nach einem der vorhergehenden Ansprüche, **dadurch gekennzeichnet, dass** die Transporteinrichtung (1) eine nach oben offene Rinne aufweist.

5. Vorrichtung nach Anspruch 3 oder 4, **dadurch gekennzeichnet, dass** der Abstand der Führungselemente (3) oder die Öffnungsweite der Rinne größer ist als die Ausdehnung der Flügel (9) parallel zur Welle (5).

6. Vorrichtung nach Anspruch 3 oder 5, **dadurch gekennzeichnet, dass** der seitliche Abstand zwischen den Flügeln (9) und den Führungselementen (3) kleiner ist als ein vorgegebener minimaler Durchmesser der Behälter (4).

7. Vorrichtung nach einem der vorhergehenden Ansprüchen, **dadurch gekennzeichnet, dass** jeder Flügel (9) als ebene Platte ausgebildet ist.

8. Vorrichtung nach einem der vorhergehenden Ansprüche, **dadurch gekennzeichnet, dass** jeder Flügel zwei plattenförmige Teile aufweist, die entlang einer Kante aufeinander stoßen, und dass die Kante parallel zur Welle verläuft.

9. Vorrichtung nach einem der vorhergehenden Ansprüche, **dadurch gekennzeichnet, dass** an der Welle (5) ein länglichen Hohlkörper (7) verdrehsicher angeordnet ist, und dass die Flügel (9) an dem länglichen Hohlkörper (7) befestigt sind.

10. Vorrichtung nach einem der vorhergehenden Ansprüche, **dadurch gekennzeichnet, dass** die spitz zulaufenden Abschnitte (10) eines Flügels (9) als Zacken oder Zähne ausgebildet sind.

11. Vorrichtung nach einem der vorhergehenden Ansprüche, **dadurch gekennzeichnet, dass** die spitz zulaufenden Abschnitte (10) der Flügel (9) die Form eines Keils, eines Konus oder einer Pyramide aufweisen.

12. Vorrichtung nach einem der vorhergehenden Ansprüche, **dadurch gekennzeichnet, dass** jeder Flügel (9) mehrere spitz zulaufende Abschnitte (10) aufweist, deren Abschnittsspitzen auf einem zur Welle (5) hin gebogenen Teilkreisabschnitt des Flügels (9) liegen.

13. Vorrichtung nach einem der vorhergehenden Ansprüche, **dadurch gekennzeichnet, dass** für alle Flügel (9) der Winkel α zwischen je zwei Flügeln (9) gleich ist, und dass das Produkt α/360° * 2 * π *r kleiner ist als die vorgegebene minimale Länge eines Behälters (4), wobei r dem Abstand zwischen der Spitze eines keil- oder konusförmigen Abschnitts (10) und der Welle (5) entspricht.

14. Vorrichtung nach einem der vorhergehenden Ansprüche, **dadurch gekennzeichnet, dass** in Transportrichtung nach der Welle (5) mit Flügeln (9) eine Brecherwalze (16) angeordnet ist.
